Europäisches Patentamt

European Patent Office

Office européen des brevets

(19)

(11) EP 0 700 047 B1

(12) ## EUROPEAN PATENT SPECIFICATION

(45) Date of publication and mention
of the grant of the patent:
**24.10.2001 Bulletin 2001/43**

(51) Int Cl.⁷: **G11B 27/032**, H04B 1/20,
G11B 27/10

(21) Application number: **95305875.7**

(22) Date of filing: **22.08.1995**

(54) **Editing methods and editing control equipment**

Schnittverfahren und Schnittsteuervorrichtung

Méthodes d'édition et équipement de commande d'édition

(84) Designated Contracting States:
**DE FR GB NL**

(30) Priority: **30.08.1994 JP 22894294**

(43) Date of publication of application:
**06.03.1996 Bulletin 1996/10**

(73) Proprietor: **SONY CORPORATION**
**Tokyo (JP)**

(72) Inventors:
 • **Sugiyama, Koichi, c/o Int. Prop. Division**
 **Shinagawa-ku, Tokyo 141 (JP)**
 • **Shima, Hisato, c/o Int. Prop. Division**
 **Shinagawa-ku, Tokyo 141 (JP)**
 • **Kawamura, Harumi, c/o Int. Prop. Division**
 **Shinagawa-ku, Tokyo 141 (JP)**

(74) Representative: **Williams, Janice et al**
**D. Young & Co.,**
**21 New Fetter Lane**
**London EC4A 1DA (GB)**

(56) References cited:
**EP-A- 0 467 305**       **EP-A- 0 522 445**
**DE-A- 3 820 835**       **US-A- 5 199 030**

• PATENT ABSTRACTS OF JAPAN vol. 017, no. 060 (P-1482), 5 February 1993 & JP 04 270468 A (NIPPON TELEGR & TELEPH CORP), 25 September 1992,
• PATENT ABSTRACTS OF JAPAN vol. 018, no. 570 (E-1623), 31 October 1994 & JP 06 209332 A (OKI ELECTRIC IND CO LTD), 26 July 1994,
• ELECTRONIC DESIGN, vol. 42, no. 5, 7 March 1994, pages 114-117, XP000441329 BURSKY D: "CHIP SET SIMPLIFIES HIGH-SPEED INTERCONNECTS THE FIST ICS TO REALIZE THE P1394 SERIAL-BUS STANDARD LET DESIGNERS BUILD SERIAL CONNECTIONS RUNNING AT 100 TO 400 MBITS/S"
• TEENER M: "A BUS ON A DIET - THE SERIAL BUS ALTERNATIVE AN INTRODUCTION TO THE P1394 HIGH PERFORMANCE SERIAL BUS" 24 February 1992 , INTELLECTUAL LEVERAGE, SAN FRANCISCO, FEB. 24 - 28, 1992, NR. CONF. 37, PAGE(S) 316 - 321 , INSTITUTE OF ELECTRICAL AND ELECTRONICS ENGINEERS XP000340753 190900 * the whole document *

EP 0 700 047 B1

**Description**

The present invention relates to editing methods and editing control equipment. In particular, the invention can be applied to a method of editing isochronous communication data and an edition controlling equipment used therefor in a system of connecting a plurality of electronic equipments by a communication control bus in which isochronous communication and asynchronous communication can be present together for communication between each of the electronic equipments.

There has been considered a system of connecting a plurality of equipments (items of equipment) by way of a communication control bus in which isochronous communication and asynchronous communication can be present together such as a serial bus according to IEEE-P1394 (hereinafter simply referred to as "P1394 serial bus") for communication between each of the equipments.

Details for the serial bus are disclosed in "IEEE P1394 Serial Bus Specification" (published on October 14, 1993).

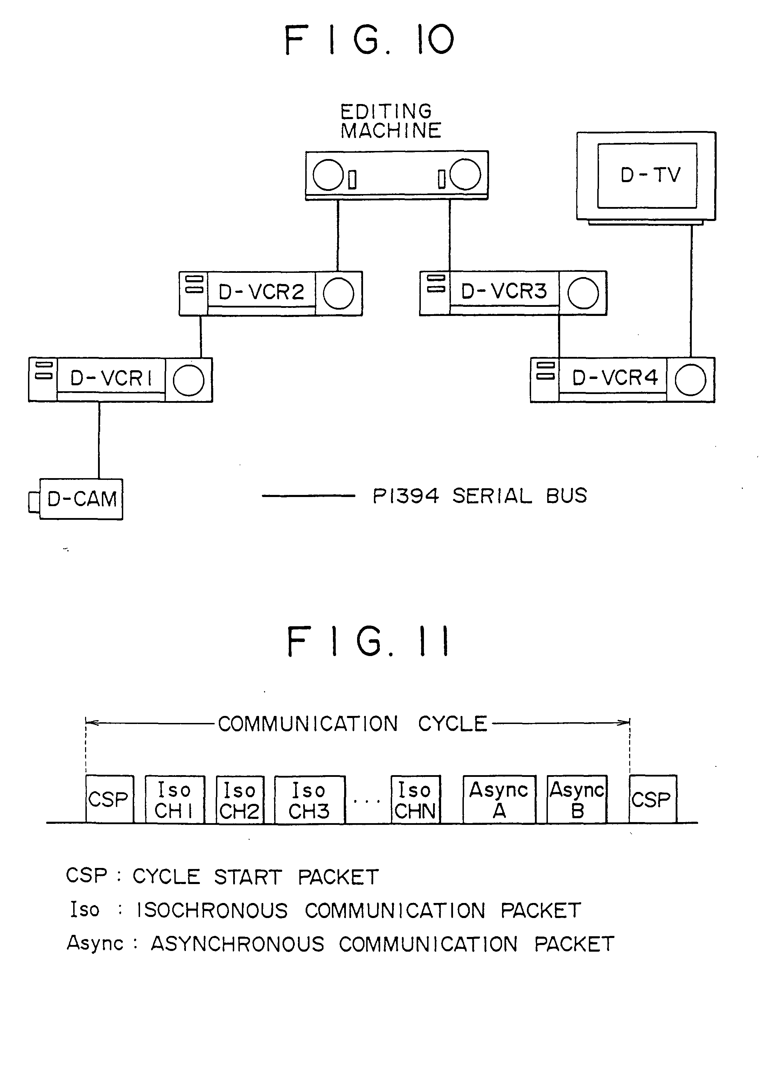

Fig. 10 shows an example of such a system. The system comprises four digital video cassette recorders (hereinafter referred to as "D-VCR"), a digital camcorder (hereinafter referred to as "D-CAM"), an editing machine (hereinafter referred to as edition controller) and a digital television receiver (herein after referred to as "D-TV"). The items of equipment are connected to each other by a cable of a P1394 serial bus. Since each of the devices has a function of relaying signals inputted from the cable of the P1394 serial bus, the communication system is equivalent with a communication system in which each of the equipments is connected with a common P1394 serial bus.

Signal transmission in the equipments having the bus in common is conducted by time division multiplex on every predetermined communication cycles as shown in Fig. 11 (for example 125 µs). For management of the communication cycle on the bus, an equipment (device) referred to as a cycle master transmits a synchronization packet indicating the starting instance of the communication cycle (cycle start packet: hereinafter referred to as "CSP") to other equipments on the bus, to start data transmission in that communication cycle. The cycle master is automatically determined by a method specified in IEEE-P1394 when each of the equipments is connected by the P1394 serial bus to constitute a communication system.

Transmission of signals transmitted during 1 communication cycle includes two kinds of modes, i.e., isochronous communication for periodically transmitting, for example, video data or audio data and asynchronous communication of transmitting, for example, a connection control command not periodically as necessary. The isochronous communication data are transmitted prior to the asynchronous communication data. Channel No. 1, 2, 3, ... , N is attached to each of isochronous communication packets making it possible to distinguish a plurality of isochronous communication data. After completion of the sending of the isochronous communication packets of all the channels to be sent, a period of time till the next CSP is used for the transmission of the asynchronous communication packet.

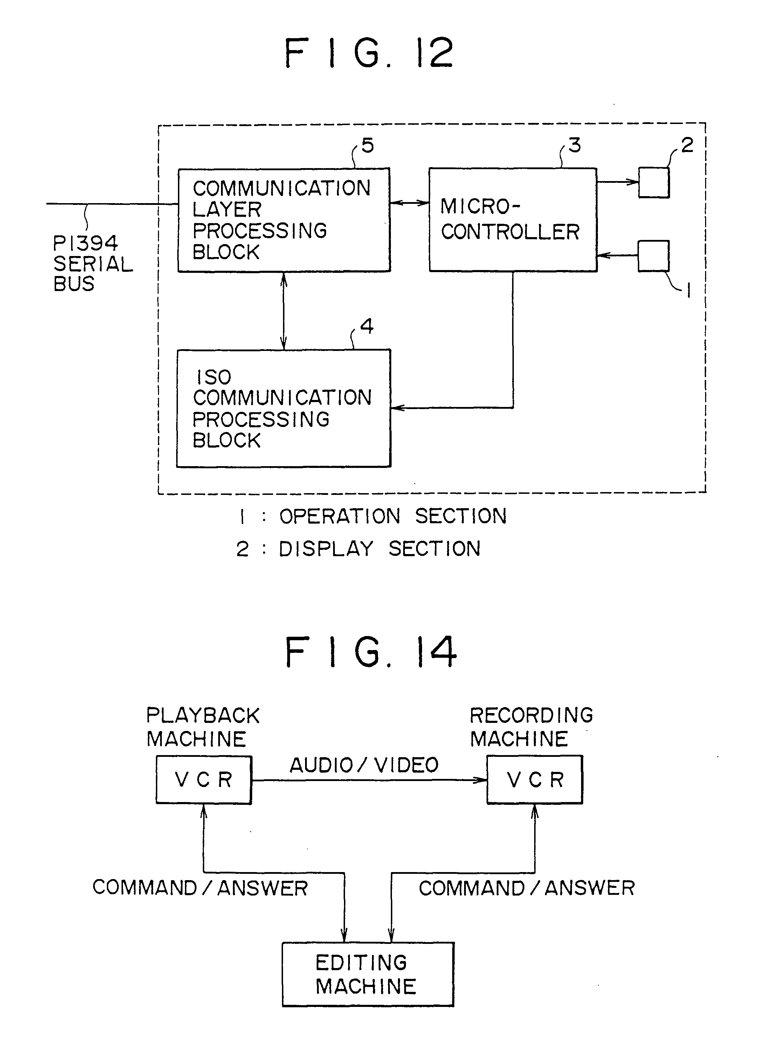

Fig. 12 shows a schematic block diagram for each of equipments. Each of the equipments (devices) comprises an operation section 1, a display section 2, a microcontroller 3, an isochronous communication data processing block 4 and a communication layer processing block 5. However, the editing machine has no isochronous communication data processing block 4.

The operation section 1 has key boards or the like for a user to operate the equipment. The display section 2 displays, for example, the operation state of the equipment.

The microcontroller 3 reads the state of the operation section 1 and prepares various types of commands for conducting desired instruction to other equipments. Further, when it receives various types of commands from other equipments, it controls the isochronous communication data processing block 4 or the communication layer processing block 5 for executing the processing corresponding to the received command. Further, it controls the state of display in the display section 2 in accordance with the operation state of the equipment.

The isochronous communication data processing block 4 is a recording/regeneration processing section for digital audio/video signals or a tuner section if the relevant equipment is D-VTR, a monitor section or a tuner section if the relevant equipment is D-TV or a recording/regeneration processing section or a camera section for digital audio/ video signals if the equipment is D-CAM.

The communication layer processing block 5 conducts processing for converting the format of an isochronous communication packet or an asynchronous communication packet between a format on the P1394 serial bus and a format in the isochronous communication data processing block 4 or the microcontroller 3 to each other, or processing for a physical layer and a link layer such as getting or aborting the right of using the bus.

In the communication system constituted as shown in Fig. 10, it is considered, for example, to conduct edition using D-VCR 1 as a playback machine, and D-VCR 2 as an recording machine by the control of the editing machine. The edition in this case is an assemble mode edition by a so-called 1:1 edition system of dubbing signals regenerated from a video tape (original tape) of a playback machine being superposed on an unnecessary portion of an already recorded area on the video tape of the recording machine (master tape).

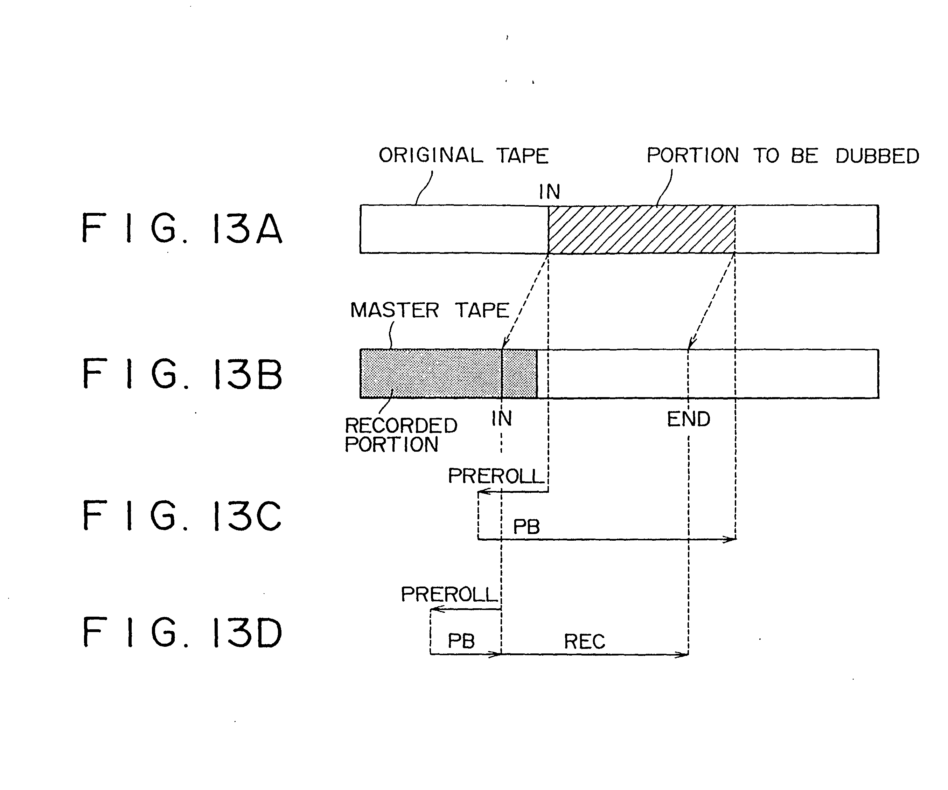

In this case, as shown by (C), (D) in Fig. 13, the editing machine at first controls such that the playback machine and the recording machine preroll from their respective IN points. Then, it conducts so as to set the playback machine to the regeneration mode and set the recording machine to the regenerating mode and, subsequently, set the recording machine to a recording mode simultaneously with arrival at the recording IN point. Then, when a required portion is recorded on the master tape, the recording operation is stopped. In this case, external synchronization is applied to the recording machine by a frame sync signal in the regenerated video signals of the playback machine, and running of the playback machine and the recording machine are controlled such that the instances at which respective tape positions reach the respective IN points coincide to each other.

For conducting such edition at a high accuracy, it is necessary for the editing machine to recognize accurate tape position information for the playback machine and the recording machine and for the playback machine and the recording machine to execute an editing control command at the instance designated by the editing machine.

Then, in order that the editing machine obtains accurate tape position information of the playback machine and the recording machine in the system as shown in Fig. 10, it may be considered to analyze system data attached to audio/video data sent by the isochronous communication packet and read an absolute track number (track number appended orderly from the beginning end of the tape to each of tracks) or a time code.

However, it is required for the editing machine to analyze the system data that a hardware for separating the system data from the audio/video data and analyzing them is provided to the editing machine.

Then, it may be considered to ask a time code by using an enquiry command packet of the asynchronous communication and get an answer from the mating section. However, the time code transmitted by the asynchronous communication packet may sometimes have a delay relative to a time code in the system data added to the audio/video data transmitted by the isochronous communication packet.

Further, since the command sent from the editing machine to the playback machine and the recording machine is transmitted by the asynchronous communication packet, there is no corelationship with time regarding audio/video data. Further, the period of time from the instance the editing machine sends a command to the instance the command is actually executed by the playback machine or the recording machine is different depending on the conditions such as the type of the command.

Although descriptions have been made to problems in the case of conducting edition by the communication system shown in Fig. 10, similar problems also occur in an edition system in which the editing machine cannot recognize the boundary of a frame for the video signals, for example, in an edition system, for example, as shown in Fig. 14, comprising a plurality of analog or digital VCR connected by analog or digital audio/video signal lines and an editing machine connected to them by way of control signal lines for sending and receiving command/answer relative to them.

EP-A-522,445 discloses an editing apparatus wherein the delay time between a VTR unit receiving a record command and actually starting to record is stored as delay time D in the controller and is compensated for by the controller when editing. Furthermore, the controller reads a counter value indicating the position of the tape and a time value indicating when it is read and from these values and the present time calculates the present tape position, it uses this information for synchronising the units.

Respective aspects of the present invention are set forth in claims 1 and 4.

In view of foregoing problems, embodiments of the invention provide an editing method and an edition controlling apparatus capable of executing edition at a high accuracy without reading system data transmitted by isochronous communication.

Also, embodiments of the present invention provide an editing method and an edition controlling apparatus capable of executing edition at a high accuracy in an edition system in which an editing machine cannot recognize a boundary of a frame of video signals.

Further embodiments of the present invention provide an editing method and an edition controlling equipment capable of executing edition at a high accuracy even if there are various delays for the time from reception of a command to execution thereof in a playback machine and a recording machine as equipments to be controlled.

In embodiments off the present invention, an edition controlling equipment transmits a predetermined instruction at a predetermined timing by asynchronous communication based on first and second delay times (td), (to) and a boundary position information or a third time information (tf). Accordingly, the edition can be conducted at a high accuracy without reading the system data of isochronous communication. In addition, the edition can be conducted at a high accuracy even if there is a delay time from reception till execution of an instruction in the equipment to be controlled.

Further, in embodiments of the present invention, the edition controlling equipment transmits predetermined instruction at a predetermined timing by way of control signal lines based on first and second delay times (td), (to) and boundary position information or third time information (tf). Accordingly, edition can be executed at a high accuracy even in an edition system in which the edition controlling equipment cannot recognize the boundary position information of information signals. Further, edition can be conducted at a high accuracy even if there is a delay time from reception till execution of an instruction in the equipment to be controlled.

As has been described above, in embodiments of the present invention, edition at a high accuracy can be conducted without reading the system data of isochronous communication in a system in which isochronous communication and synchronous communication can be present together.

Further, edition can be conducted at a high accuracy also in a system in which the edition controlling equipment cannot recognize the boundary in the information signals. Further, even if there are various delay times from reception till execution of an instruction in the equipment to be controlled, edition can be conducted at a high accuracy.

Embodiments of the invention will now be described, by way of example, with reference to the accompanying drawings in which:

Fig. 1 is a chart for explaining a command processing delay time;

Fig. 2 is a chart illustrating a command receiving time for ensuring a command processing delay time;

Fig. 3 is a view for explaining processing for detecting a frame boundary from a time code,

Fig. 4 is a chart illustrating a delay of a time code obtained by synchronous communication from the time code in isochronous communication data,

Fig. 5 is a chart illustrating an example of isochronous communication data and time code in the PB-Pause state,

Fig. 6 is a chart explaining the processing of adding time information form the top of the frame to the response of the time code,

Fig. 7 is a chart illustrating processing for extracting frame sync from a header of isochronous communication data,

Fig. 8 is a chart illustrating an example of an editing method to which the present invention is applied;

Fig. 9 shows a transmission time of various kinds of commands near video recording IN points in Fig. 8;

Fig. 10 is a diagram illustrating an example of communication system in which a plurality of equipments are connected by a P1394 serial bus,

Fig. 11 is a chart illustrating an example of a communication cycle in P 1394 serial bus,

Fig. 12 is a schematic block diagram of equipments connected to P 1394 serial bus,

Fig. 13 is a chart illustrating a relevant editing method,

Fig. 14 is a diagram illustrating an example of a relevant editing system.

Preferred embodiments of the present invention will be explained with reference to the drawings, regarding (A) delay time from reception till execution of a command, (B) a time from the top of a frame for ensuring the delay time, (C) detection for the top of the frame and (D) an example of an editing method to which the present invention is applied, in this order.

(A) Delay time from reception till execution of a command: As described above, the time from the instance a control command sent by asynchronous communication is received till the instance the command is actually executed is different depending on the kind of the control command, the equipment receiving the control command and the operation state of the equipment upon receiving the control command.

In embodiments of the present invention, an editing machine asks to (requests from) each of the equipments (D-VCR in this embodiment) (hereinafter referred to as "command processing delay time") necessary time till starting a designated operation from the reception of a control command. The command delay time is defined as td and illustrated in Fig,. 1.

As shown in the figure, the command processing delay time td is represented on the basis of frame units as elapse of time from the top of a frame receiving the command (an example: td = 3 is shown in the figure). An object for enquiry in this embodiment is the followings which are necessary for the edition control, among various kinds of command processing delay times.

(1) Command processing delay time asked to playback machine:

$$\text{PB-Pause} \rightarrow \text{PB} = \text{Delay-P1}$$

$$\text{PB} \rightarrow \text{PB-Pause} = \text{Delay-P2}$$

$$\text{External sync PB-Pause} \rightarrow \text{external sync PB} = \text{Delay-P3}$$

(2) Command processing delay time asked to recording machine:

$$\text{REC-Pause} \rightarrow \text{REC} = \text{Delay-R1}$$

$$REC \rightarrow REC\text{-}Pause = Delay\text{-}R2$$

$$External\ sync\ PB\text{-}Pause \rightarrow external\ sync\ PB = Delay\text{-}R3$$

$$External\ sync\ PB \rightarrow REC = Delay\text{-}R4$$

Since the command processing delay time td can take a different value on each transition, the editing machine asks all necessary values in accordance with an edition mode to each of the playback machine and the recording machine using an asynchronous communication packet.

(B) Time from the top of the frame for ensuring a command processing delay time: The command processing delay time td can thus be obtained. However, D-VCR is in frame synchronization by reading a header of isochronous communication data, the timing of starting the execution may be different sometimes depending on the position in the frame (time from the top of the frame) of receiving the command. Then, the editing machine asks a time tc illustrating the command sending timing elapsed from the top of the frame to ensure td on each of the equipments. Then, the command sending timing is determined based on tc and td.

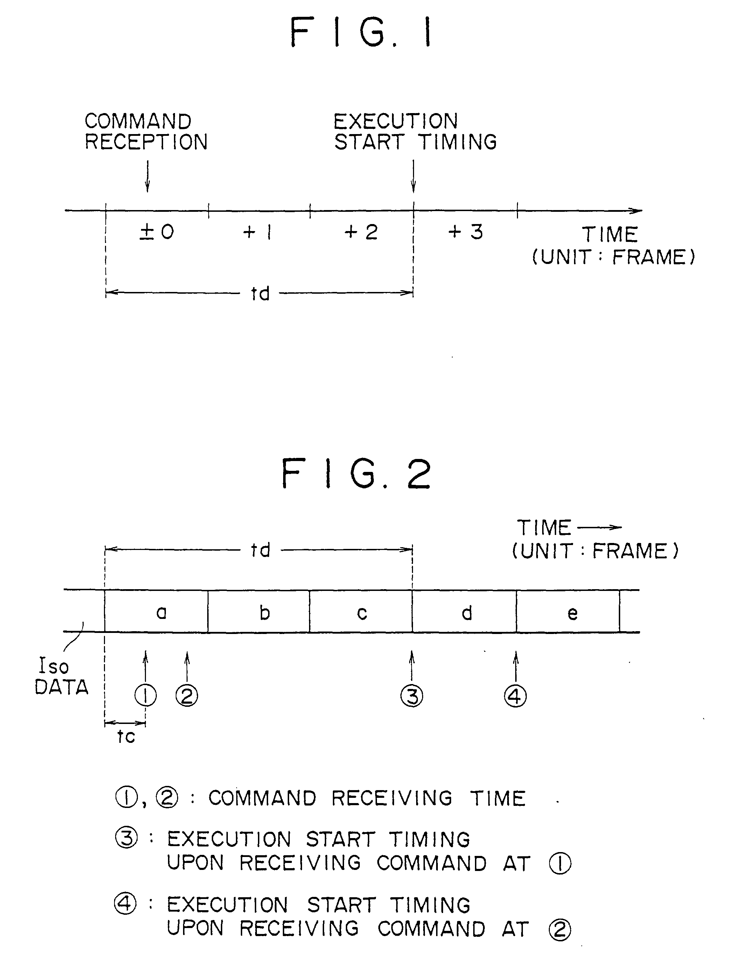

tc is to be explained with reference to Fig. 2. When a command is received at a time "1" elapsed by tc from the top of a frame a, a command execution is started at a time 3 (top of a frame d) after elapse of a delay time td. On the other hand, if the command is received at time 2 later than tc from the top of the frame a, the command execution is started at time 4 (at the top of the frame a) later by 1 frame than the delay time td.

If a time from a boundary of the frame to the command sending timing is always made constant, the command can be sent with no asking about the time tc.

(C) Detection for the top of frame: Even if the sending timing tc in the frame is thus recognized, it is further necessary, for determining the timing for actually sending the command that the editing machine distinguishes the top of the frame.

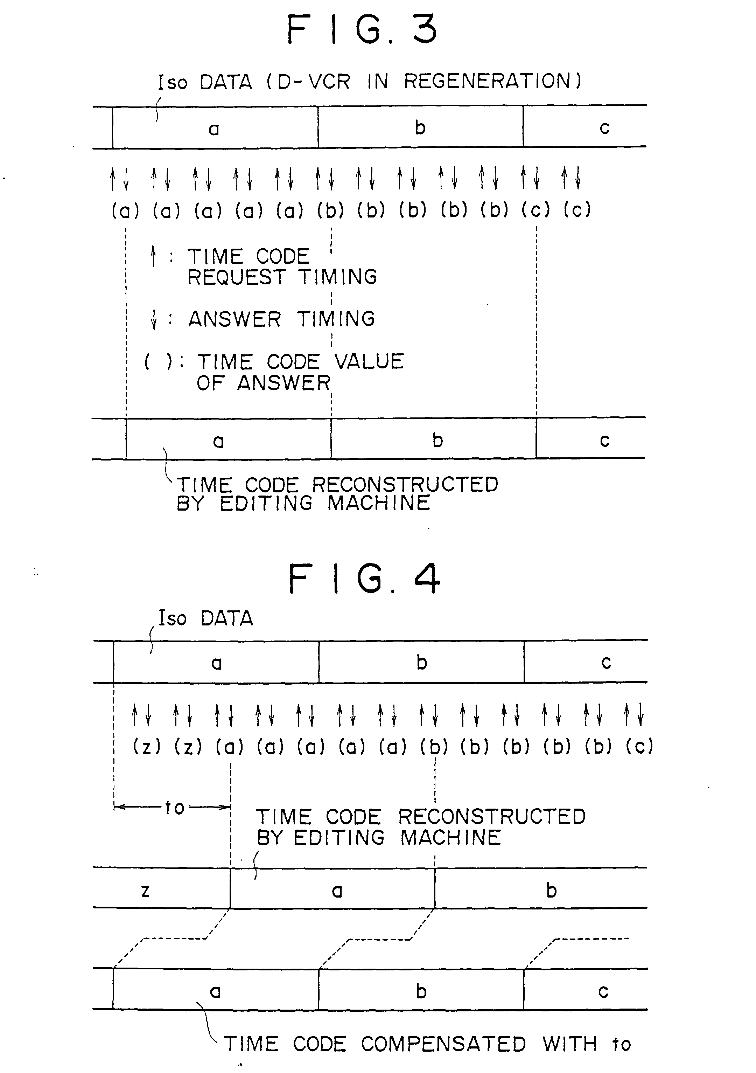

Then, in this embodiment, as shown in Fig. 3, the editing machine asks a time code continuously during regeneration of D-VCR, and reconstructs a time code from the changing point of the time code obtained by the answer to detect the boundary of the frame. In this method, detection aligns with the boundary of a frame of video data only if a time code transmitted by the asynchronous communication has no delay relative to a time code in system data transmitted by the isochronous communication.

By the way, in view of the constitution of an internal system of D-VCR, a time code that answers the asking by the asynchronous communication sometimes makes a delay relative to a time code in system data transmitted by the isochronous communication. Then, as shown in Fig. 4, in this embodiment, a time code compensated with the delay time to is reconstructed to thereby distinguish the boundary of the frame.

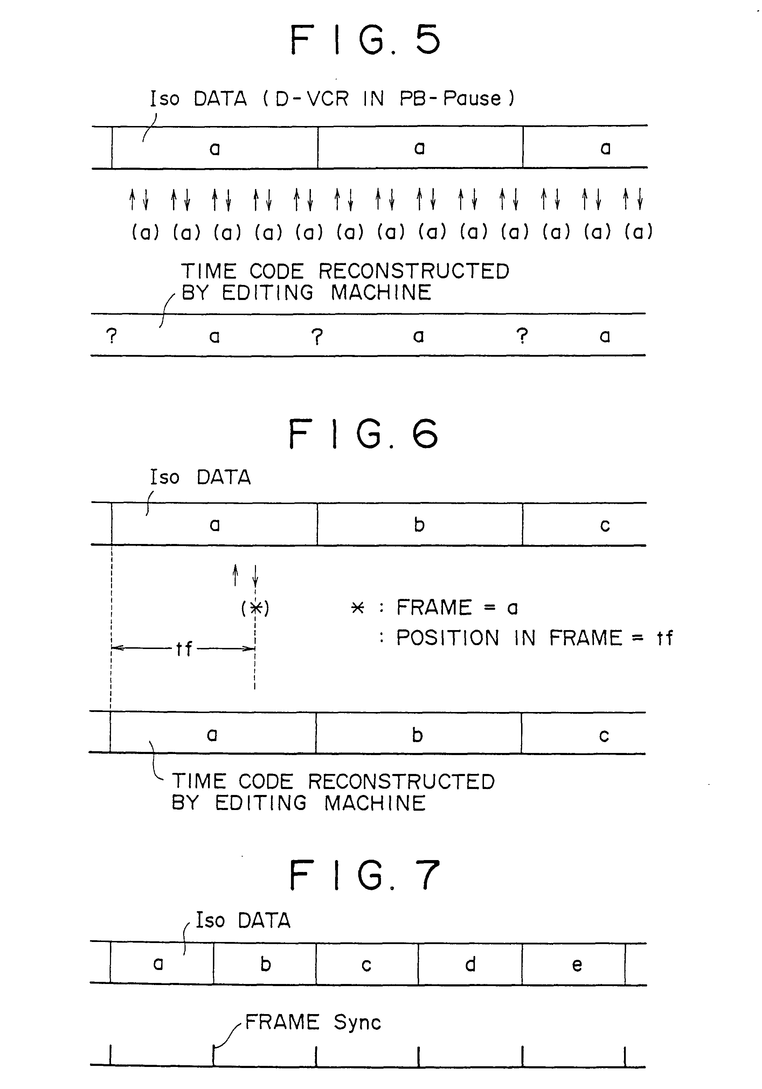

The boundary of the frame can thus be distinguished. However, since an identical value is always returned on every asking about the time code as shown in Fig. 5 if D-VCR is in a PB-Pause state or the like, the boundary of the frame cannot be detected.

Then, in this embodiment, two means are considered for recognizing the frame boundary even if D-VCR is in the PB-Pause state. One of them is to add time information from the top of the frame as an answer to the asking for the time code as shown in Fig. 6.

The second means is adapted to extract a frame sync from a header of a system data in the isochronous communication as shown in Fig. 7. In this case, the editing machine requires a hardware for extracting the frame sync from the header.

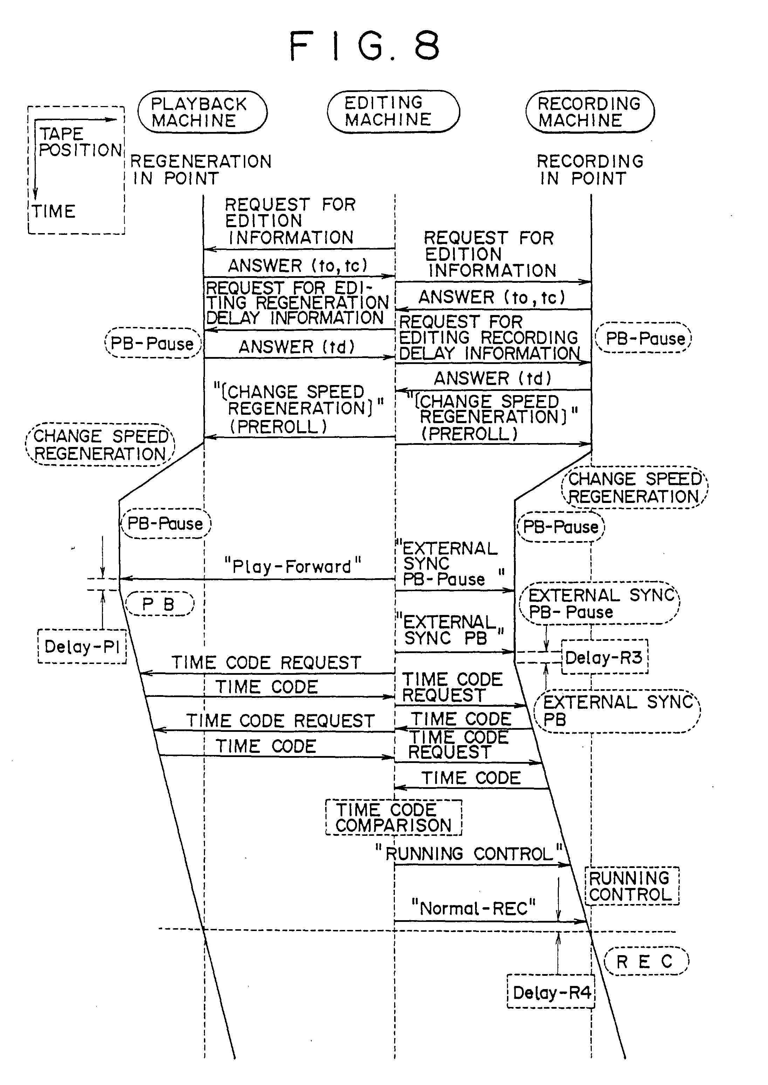

(D) Example of an editing method embodying the present invention: Next, description will be made to a case of conducting edition by using the method described above as shown in Fig. 13, with reference to Fig. 8.

At first, the editing machine asks the delay time to and tc to the playback machine, receives an answer from the playback machine and, successively, asks the delay time to and tc to the recording machine in the same manner and receives an answer. Further, it asks the delay time td to the playback machine and receives an answer from the playback machine and, successively, asks the delay time tc to the recording machine and receives an answer. In this instance, the playback machine and the recording machine are in the PB Pause state.

When the delay time is obtained from the playback machine and the recording machine, the tape position of the playback machine is prerolled for a predetermined period of time from the regeneration IN point (for example, 5 sec) and, successively, the tape position of the recording machine is prerolled for a predetermined period of time (for example, for 5 sec) from the recording IN point.

Then, the editing machine sends a play-forward command to the playback machine. The playback machine executes the command upon elapse of the delay time of PB-Pause → PB (Delay-Pl) after receiving the command.

Successively, the editing machine sets external synchronization PB-Pause mode for synchronizing the recording machine by a regenerated video signal of the playback machine. Further, it sets the recording machine from external sync PB-Pause to external sync PB. After receiving the command, the recording machine executes the command upon elapse of a delay time (Delay-R3) of external, sync PB-Pause → external sync PB.

When both of the playback machine and the recording machine are set in this way to the regeneration mode, the editing machine asks a time code to each of the playback machine and the video recording machine in order to examine the tape position in each of them. Then, the editing machine compares the time codes of the playback machine and the video recording machine and controls running as required such that the playback machine reaches the regeneration IN point and recording IN point simultaneously. Then, it sends a recording command (normal-REC) at an instance earlier than the delay time (D-R4) of external sync PB → REC from the recording IN point, so that the recording machine is set accurately to the recording mode at the recording mode IN point.

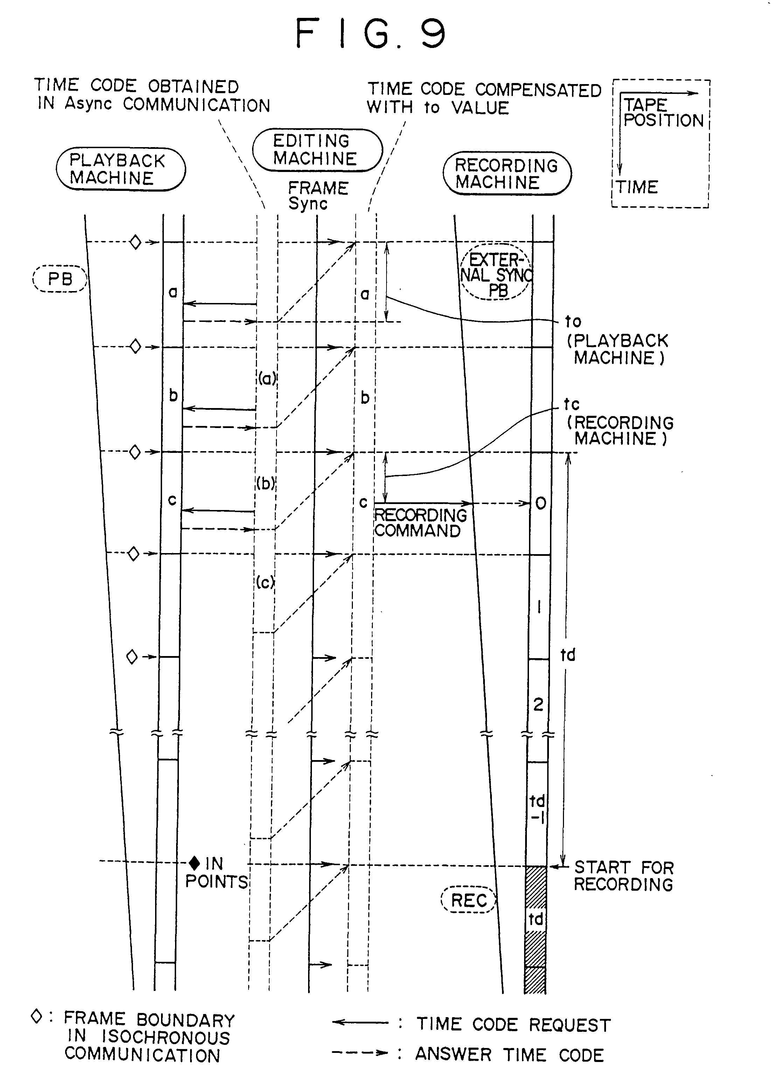

Fig. 9 shows sending timing for various kinds of commands near the recording IN point in Fig. 8. This is an example for distinguishing the boundary of the frame based on the frame sync as has been explained previously with reference to Fig. 7. Embodiments of the present invention can also be constituted such that a time information tf from the top of the frame is added as an answer to inquiry for the time code explained previously with reference to Fig. 6.

The foregoing embodiment concerns the 1:1 edition system assemble mode, but the present invention is applicable also to an A-B roll edition system or an insert mode edition.

Further, the foregoing embodiment relates to edition in a communication system in which audio-video equipments are connected by the P 1394 serial bus. However, the present invention is applicable also to an edition system in which the editing machine cannot recognize the boundary of the frame of video signals, for example, to an edition system comprising, as shown in Fig. 14, a plurality of analog or digital audio/video signal lines and an editing machine connected by control signal lines that sends/receives command/answer to/from them. In this embodiment, communication by the audio/video signal lines corresponds to the isochronous communication in the P 1394 serial bus and communication by the control signal lines corresponds to the synchronous communication.

## Claims

1. An editing method for editing isochronous information arranged in a number of sections in a system having a plurality of devices connected by a communication control bus in which isochronous communication and asynchronous communication can be present together and conducting communication between each of the devices, in which an edition controlling device controls via a plurality of asynchronous predetermined commands a plurality of devices thereby editing isochronous communication data to a recording device as one of said devices to be controlled, said method comprising the following steps of:

   requesting from the devices to be controlled a first delay time (td) from the time one of the predetermined asynchronous commands is received by a device to be controlled to the time the processing corresponding to the command is executed, determining a second delay time of a time code received by the edit controlling device by asynchronous communication from a time code in the isochronous communication data,
   requesting a time code from the isochronous communication data from the devices to be controlled, and obtaining boundary position information of the sections based on a change of the time codes in the isochronous communication data, or requesting from the devices to be controlled by asynchronous communication a third time information (tf) from the top position of a section of the isochronous communication, and

   sending an asynchronous predetermined command at a predetermined timing, based on the first and the second delay times, and the boundary position information or the third time information.

2. An editing method as defined in claim 1, wherein at least one of the devices to be controlled is a digital video cassette recorder.

3. An editing method as defined in claim 1, wherein at least one of the devices to be controlled is a digital editing device.

4. An edition controlling device for editing isochronous information arranged in a number of sections in a system having a plurality of devices connected by a communication control bus in which isochronous communication and asynchronous communication can be present together and conducting communication between each of the devices, in which an edition controlling device controls via a plurality of asynchronous predetermined commands a plurality of devices thereby editing isochronous communication data to a recording device as one of said devices to be controlled, said edition controlling device comprising:

first delay time (td) determining means, said means being operable to request from the devices to be controlled a difference between a time a predetermined command is received by the equipment to be controlled and the time the processing corresponding to the command is executed by the asynchronous communication;

second delay time determining means, said means being operable to determine a second delay time of a time code received by the edit controlling device by asynchronous communication from a time code in the isochronous communication data;

means for obtaining a boundary position information of a section in the isochronous communication data, said means being operable to request a time code of the devices to be controlled from the isochronous communication data; and/or

means for obtaining from the devices to be controlled by asynchronous communication a third time information from the top position of a section in the isochronous communication data, and

transmitting means for sending a predetermined command at a predetermined timing by the asynchronous communication, based on the first and the second delay times, and the boundary position information or the third time information.

5. An edition controlling device as defined in claim 4, wherein at least one of the devices to be controlled is a digital video cassette recorder.

6. An edition controlling device as defined in claim 4, wherein at least one of the devices to be controlled is a digital editing device.

**Patentansprüche**

1. Editierverfahren zum Editieren isochroner Information, welche in einer Anzahl von Abschnitten in einem System eingerichtet ist, welches mehrere Geräte besitzt, die über einen Kommunikationssteuerbus verbunden sind, in welchem isochrone Kommunikation und asynchrone Kommunikation zusammen vorhanden sein können und eine Kommunikation zwischen jedem der Geräte durchgeführt wird, wobei ein Editiersteuergerät über mehrere asynchrone vorher-festgelegte Befehle mehrere Geräte steuert, um dadurch isochrone Kommunikationsdaten für ein Aufzeichnungsgerät als eines der zu steuernden Geräte zu editieren, wobei das Verfahren folgende Schritte umfaßt:

Anfordern von den zu steuernden Geräten einer ersten Verzögerungszeit (td) von dem Zeitpunkt, bei der einer der vorher-festgelegten asynchronen Befehle durch ein zu steuerndes Gerät empfangen wird, bis zu dem Zeitpunkt, wo die Verarbeitung entsprechend dem Befehl ausgeführt wird, Bestimmen einer zweiten Verzögerungszeit eines Zeitcodes, der durch das Editiersteuergerät empfangen wird, durch asynchrone Kommunikation von einem Zeitcode in den isochronen Kommunikationsdaten,

Anfordern eines Zeitcodes von den isochronen Kommunikationsdaten von den zu steuernden Geräten und Erhalten einer Grenzpositionsinformation der Abschnitte auf der Basis einer Änderung der Zeitcodes in den isochronen Kommunikationsdaten, oder Anfordern von den zu steuernden Geräten durch asynchrone Kommunikation einer dritten Zeitinformation (tf) von der Kopfposition eines Abschnittes der isochronen Kommunikation, und

Senden eines asynchronen vorher-festgelegten Befehls mit einer vorher-festgelegten zeitlichen Abstimmung auf der Basis der ersten und der zweiten Verzögerungszeit und der Grenzpositionsinformation oder der dritten Zeitinformation.

2. Editierverfahren nach Anspruch 1, wobei zumindest eines der zu steuernden Geräte ein digitaler Videokassettenrekorder ist.

3. Editierverfahren nach Anspruch 1, wobei zumindest eines der zu steuernden Geräte ein digitales Editiergerät ist.

4. Editiersteuergerät zum Editieren von isochroner Information, welche in einer Anzahl von Abschnitten in einem System eingerichtet ist, welches mehrere Geräte aufweist, die über einen Kommunikationsbus miteinander verbunden sind, wobei isochrone Kommunikation und asynchrone Kommunikation zusammen vorhanden sein können und die Kommunikation zwischen jedem der Geräte durchgeführt wird, wobei ein Editiersteuergerät über mehrere asynchrone vorher-festgelegte Befehle mehrere Geräte steuert, um dadurch isochrone Kommunikationsdaten für ein Aufzeichnungsgerät als eines der zu steuernden Geräte zu editieren, wobei das Editiersteuergerät umfaßt:

eine erste Verzögerungszeit (td) -Ermittlungseinrichtung, wobei die Einrichtung von den zu steuernden Geräten eine Differenz zwischen einer Zeit a anfordert, wo ein vorherfestgelegter Befehl durch das zu steuernde Gerät empfangen wird, und der Zeit, wo die Verarbeitung entsprechend dem Befehl durch die asynchrone Kommunikation ausgeführt wird;

eine zweite Verzögerungszeit-Ermittlungseinrichtung, wobei das Gerät eine zweite Verzögerungszeit eines Zeitcodes bestimmt, der durch das Editiersteuergerät durch asynchrone Kommunikation von einem Zeitcode in den isochronen Kommunikationsdaten empfangen wird;

eine Einrichtung zum Erhalten einer Grenzpositionsinformation eines Abschnittes in den isochronen Kommunikationsdaten, wobei die Einrichtung einen Zeitcode der zu steuernden Einrichtungen von den isochronen Kommunikationsdaten anfordert; und/oder

eine Einrichtung, um von den zusteuernden Geräten durch asynchrone Kommunikation eine dritte Zeitinformation von der Kopfposition eines Abschnitts in den isochronen Kommunikationsdaten zu erhalten, und

eine Übertragungseinrichtung, um einen vorher-festgelegten Befehl mit einer vorher-festgelegten zeitlichen Abstimmung durch die asynchrone Kommunikation auf der Basis der ersten und der zweiten Verzögerungszeit und der Grenzpositionsinformation oder der dritten Zeitinformation zu liefern.

5. Editiersteuergerät nach Anspruch 4, wobei zumindest eines der zu steuernden Geräte ein digitaler Videokassettenrekorder ist.

6. Editiersteuergerät nach Anspruch 4, wobei zumindest eine der zu steuernden Geräte ein digitales Editiergerät ist.


## Revendications

1. Procédé de montage pour monter des informations isochrones disposées dans un nombre de sections dans un système ayant une pluralité de dispositifs raccordés par un bus de commande de communication dans lequel une communication isochrone et une communication asynchrone peuvent être présentes en même temps et effectuer la communication entre chacun des dispositifs, dans lequel un dispositif de commande de montage commande via une pluralité de commandes prédéterminées asynchrones une pluralité de dispositifs, pour monter ainsi des données de communication isochrones pour un dispositif d'enregistrement comme un desdits dispositifs à commander, ledit procédé comprenant les étapes suivantes de :

demande à partir des dispositifs à commander d'un premier retard (td) à partir du moment où une des commandes prédéterminées asynchrones est reçue par un dispositif à commander jusqu'au moment du traitement correspondant où la commande est exécuté, détermination d'un second retard d'un code de temps reçu par le dispositif de commande de montage par une communication asynchrone à partir d'un code de temps dans les données de communication isochrone,

demande d'un code de temps à partir des données de communication isochrone à partir du dispositif à commander, et obtention des informations de position limite des sections basées sur une variation des codes de temps dans les données de communication isochrone, ou demande à partir des dispositifs à commander par la communication asynchrone d'une troisième information de temps (tf) à partir de la position d'une section de la communication isochrone, et

envoie d'une commande prédéterminée asynchrone à un instant prédéterminé, sur la base des premier et le second retard, et des informations de position de limite ou une troisième information de temps.

2. Procédé de montage selon la revendication 1, dans lequel au moins un des dispositifs à commander est un magnétoscope numérique.

3. Procédé de montage selon la revendication 1, dans lequel au moins un des dispositifs à commander est un dispositif de montage numérique.

4. Dispositif de commande de montage pour éditer des informations isochrones disposées dans un nombre de sections dans un système ayant une pluralité de dispositifs raccordés par un bus de commande de communication dans lequel une communication isochrone et une communication asynchrone peuvent être présentes en même temps et effectuer une communication entre chacun des dispositifs, dans lequel un dispositif de commande de montage commande via une pluralité de commandes asynchrones prédéterminées une pluralité de dispositifs pour monter ainsi des données de communication isochrone sur un dispositif d'enregistrement comme un desdits dispositifs à commander, ledit dispositif de commande de montage comprenant :

un premier moyen de détermination de retard (td), ledit moyen étant utilisable pour demander à partir des dispositifs à commander une différence entre le moment où une commande prédéterminée est reçue par l'équipement à commander et le moment où le traitement correspondant à la commande est exécuté par la communication asynchrone ;

un second moyen de détermination de retard, ledit moyen étant utilisable pour déterminer un second retard d'un code de temps reçu par le dispositif de commande de montage par une communication asynchrone à partir d'un code de temps dans les données de communication isochrone ;

un moyen pour obtenir des informations de position de limite d'une section dans les données de communication isochrone, ledit moyen étant utilisable pour demander un code de temps des dispositifs à commander à partir des données de communication isochrone : et/ou

un moyen pour obtenir à partir des dispositifs à commander par une communication asynchrone une troisième information de temps à partir de la position de début d'une section dans les données de communication isochrone, et

un moyen de transmission pour envoyer une commande prédéterminée à un instant prédéterminé par la communication asynchrone, sur la base des premier et second retards, et les informations de position de limite ou la troisième information de temps.

5.  Dispositif de commande de montage selon la revendication 4, dans lequel au moins un des dispositifs à commander est un magnétoscope numérique.

6.  Dispositif de commande de montage selon la revendication 4, dans lequel au moins un des dispositifs à commander est un dispositif de montage numérique.

# F I G. I

COMMAND
RECEPTION

EXECUTION
START TIMING

± 0    + 1    + 2    + 3    TIME
(UNIT : FRAME)

td

# F I G. 2

TIME ⟶
(UNIT : FRAME)

td

| a | b | c | d | e |

Iso
DATA

① ②    ③    ④

tc

①, ② : COMMAND RECEIVING TIME

③ : EXECUTION START TIMING
    UPON RECEIVING COMMAND AT ①

④ : EXECUTION START TIMING
    UPON RECEIVING COMMAND AT ②

# F I G. 3

Iso DATA (D-VCR IN REGENERATION)

| | a | b | c |
|---|---|---|---|

↑↓ ↑↓ ↑↓ ↑↓ ↑↓ ↑↓ ↑↓ ↑↓ ↑↓ ↑↓ ↑↓ ↑↓

(a) (a) (a) (a) (a) (b) (b) (b) (b) (b) (c) (c)

↑ : TIME CODE
 REQUEST TIMING

↓ : ANSWER TIMING

( ) : TIME CODE VALUE
 OF ANSWER

| | a | b | c |
|---|---|---|---|

TIME CODE RECONSTRUCTED
BY EDITING MACHINE

# F I G. 4

Iso DATA

| | a | b | c |
|---|---|---|---|

↑↓ ↑↓ ↑↓ ↑↓ ↑↓ ↑↓ ↑↓ ↑↓ ↑↓ ↑↓ ↑↓ ↑↓ ↑↓

(z) (z) (a) (a) (a) (a) (a) (b) (b) (b) (b) (b) (c)

←— $t_0$ —→

TIME CODE RECONSTRUCTED
BY EDITING MACHINE

| z | a | b |
|---|---|---|

| | a | b | c |
|---|---|---|---|

TIME CODE COMPENSATED WITH $t_0$

# F I G. 5

Iso DATA ( D-VCR IN PB-Pause )

| a | a | a |

↑↓ ↑↓ ↑↓ ↑↓ ↑↓ ↑↓ ↑↓ ↑↓ ↑↓ ↑↓ ↑↓ ↑↓ ↑↓

(a) (a) (a) (a) (a) (a) (a) (a) (a) (a) (a) (a) (a)

TIME CODE RECONSTRUCTED
BY EDITING MACHINE

| ? | a | ? | a | ? | a |

# F I G. 6

Iso DATA

| a | b | c |

↑ ↓
(*)

←—tf—→

* : FRAME = a
   : POSITION IN FRAME = tf

| a | b | c |

TIME CODE RECONSTRUCTED
BY EDITING MACHINE

# F I G. 7

Iso DATA

| a | b | c | d | e |

FRAME Sync

# F I G. 8

EP 0 700 047 B1

# FIG. 9

TIME CODE OBTAINED
IN Async COMMUNICATION

TIME CODE COMPENSATED
WITH to VALUE

TAPE POSITION → 

TIME ↓

PLAYBACK MACHINE

EDITING MACHINE

FRAME Sync

RECORDING MACHINE

PB

EXTER-NAL SYNC PB

a
(a)
b
(b)
c
(c)

to (PLAYBACK MACHINE)

tc (RECORDING MACHINE)

RECORDING COMMAND

0
1
2
td
td-1
td

IN POINTS

START FOR RECORDING

REC

◇ : FRAME BOUNDARY IN ISOCHRONOUS COMMUNICATION

◀—— : TIME CODE REQUEST

----▶ : ANSWER TIME CODE

14

# F I G. IO

EDITING
MACHINE

D - TV

D - VCR2

D - VCR3

D - VCR I

D - VCR4

D-CAM

——————— PI394 SERIAL BUS

# F I G. II

COMMUNICATION CYCLE

| CSP | Iso CHI | Iso CH2 | Iso CH3 | . . . | Iso CHN | Async A | Async B | CSP |

CSP : CYCLE START PACKET

Iso : ISOCHRONOUS COMMUNICATION PACKET

Async : ASYNCHRONOUS COMMUNICATION PACKET

EP 0 700 047 B1

# F I G. 12

COMMUNICATION LAYER PROCESSING BLOCK — 5

MICRO-CONTROLLER — 3

2

1

PI394 SERIAL BUS

ISO COMMUNICATION PROCESSING BLOCK — 4

1 : OPERATION SECTION
2 : DISPLAY SECTION

# F I G. 14

PLAYBACK MACHINE

RECORDING MACHINE

VCR — AUDIO / VIDEO → VCR

COMMAND / ANSWER

COMMAND / ANSWER

EDITING MACHINE

16

ORIGINAL TAPE          PORTION TO BE DUBBED

F I G. 13A

MASTER TAPE

F I G. 13B

RECORDED
PORTION

IN

END

PREROLL

F I G. 13C

PB

PREROLL

F I G. 13D

PB          REC

EP 0 700 047 B1